# EUROPEAN PATENT SPECIFICATION

(11) **EP 2 543 581 B1**
(45) Date of publication and mention of the grant of the patent: **23.10.2013**
(21) Application number: 12172396.9
(22) Date of filing: 18.06.2012
(51) Int. Cl.: B62J 17/02, F02M 35/16

(54) **Cowl structure of saddle-ride type vehicle**
Verkleidungsstruktur für ein Fahrzeug mit Sattel
Structure de capot pour véhicule à monture de selle

(30) Priority: 07.07.2011 JP 2011151000
(43) Date of publication of application: 09.01.2013
(73) Proprietor: Honda Motor Co., Ltd., Tokyo 107-8556 (JP)
(72) Inventor: Sato, Masatoshi, Saitama, 351-0193 (JP); Miki, Sosuke, Saitama, 351-0193 (JP); Ohta, Koichi, Saitama, 351-0193 (JP); Tokumura, Daisuke, Saitama, 351-0193 (JP); Tsujimoto, Arihide, Saitama, 351-0193 (JP); Kataoka, Hanako, Saitama, 351-0193 (JP)
(74) Representative: Herzog, Markus

(56) References cited:
- EP-A1- 2 161 187
- JP-A- 2005 271 849
- JP-A- 2010 234 901
- JP-A- 2011 011 570
- US-A1- 2006 048 991
- US-A1- 2009 108 629

## Description

### Technical Field

The present invention relates to a saddle-ride type vehicle having a cowl structure.

### Background Art

A saddle-ride type vehicle according to the preamble of claim 1 is known from US 2006/048991 A1.

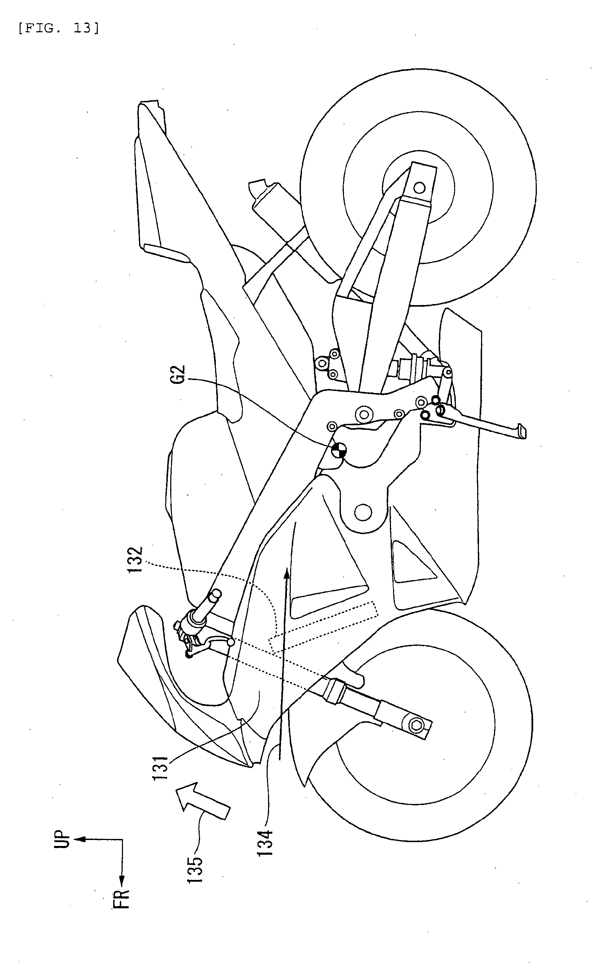

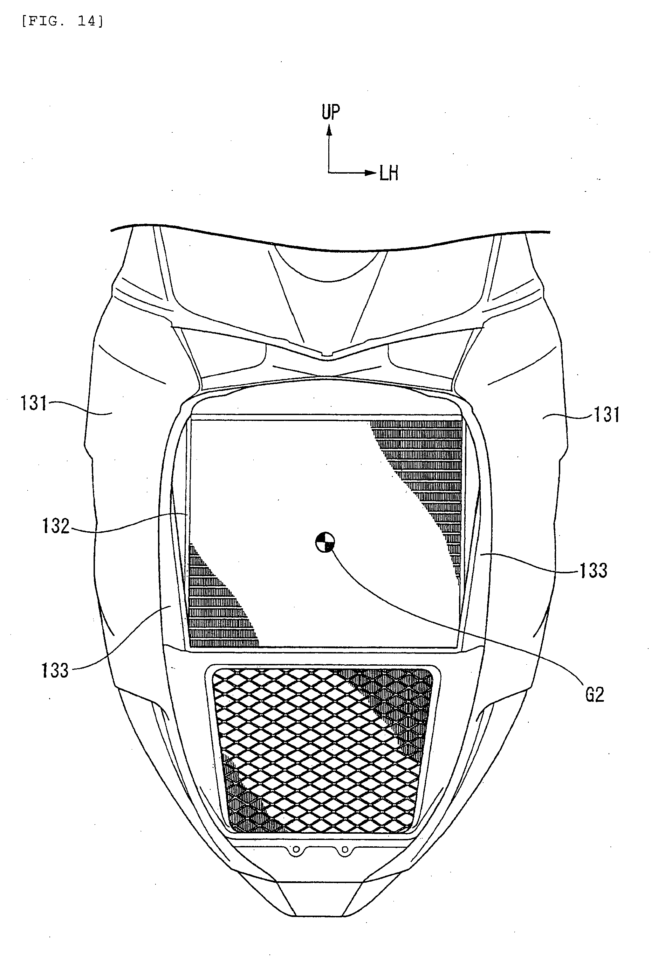

Japanese Patent Document No. JP-A-4358011 discloses a cowl structure including paired left and right side cowls covering a radiator, which is disposed facing frontward, from its left and right, and an inner cowl disposed straddling the space between the side cowls and the front edge of the radiator. Figs. 13 and 14 show a conventional motorcycle having the above structure, and reference numerals 131, 132, and 133 in the drawings represent the side cowls, the radiator, and the inner cowl, respectively.

### Summary of the Invention

### Problem to be Solved by the Invention

In such a motorcycle, when reference numeral G2 in Figs. 13 and 14 is set as the center of gravity of the motorcycle, a part (134) of travelling wind flowing through the radiator 132 flows above the center of gravity G2 of the vehicle. In addition, since travelling wind cannot freely flow through the radiator 132, the motorcycle is subjected to a resistance by the travelling wind. For this reason, the motorcycle is subjected to a moment (135) in a direction to lift a front part of the vehicle by the resistance of the travelling wind flowing above the center of gravity G2. This in turn decreases the load distributed to the front wheel.

It is desired to suppress such a decrease in the load distributed to the front wheel in some cases depending on the type of vehicle. To do so, it is possible, for example, to extend the left and right side cowls inward in the vehicle width direction from an opening formed by the front edges thereof, so as to make it difficult for the travelling wind to flow through the radiator above the center of gravity. Such a method, however, has a problem of influencing the design of the side cowls.

The present invention has been made in view of the above circumstance, and an object thereof is to provide a saddle-ride type vehicle having a cowl structure and a radiator disposed between side cowls of said cowl structure, in which the cowl structure can reduce travelling wind flowing through the radiator above the center of gravity of the vehicle, without deteriorating the design freedom.

### Means for Solving the Problem

For the purpose of solving the above-mentioned problem, a first aspect of the present invention provides a saddle-ride type vehicle having a cowl structure, including: paired left and right side cowls (32) covering both lateral sides of a front part of the vehicle, respectively; a radiator (23) having left and right lateral portions thereof covered with the side cowls (32), respectively, and disposed facing frontward; and paired left and right inner cowls (37) disposed between the radiator (23) and the side cowls (32) in such a way as to straddle spaces between the lateral portions of the radiator (23) and front edges of the side cowls (32), respectively. The cowl structure includes inhibitor portions (44) having inhibitor surfaces (43) extending inward in a vehicle width direction from inner surfaces, in the vehicle width direction, of the inner cowls in such a way as to be discontinuous from design surfaces of the side cowls (32) and to hit the inner surfaces, in the vehicle width direction, of the inner cowls (37) at positions upward of a center of gravity (G1) of the vehicle and rearward of the front edges of the side cowls (32), respectively.

According to a second aspect of the present invention, in the saddle-ride type vehicle according to the first aspect of the present invention, each of the inhibitor surfaces (43) has a first surface (45) facing frontward obliquely outwardly in the vehicle width direction.

According to a third aspect of the present invention, in the saddle-ride type vehicle according to the second aspect of the present invention, each of the inhibitor surfaces (43) further has a second surface (46) located behind the first surface (45) and facing frontward, and a stepped portion (47) formed between the first surface (45) and the second surface (46).

According to a fourth aspect of the present invention, in the saddle-ride type vehicle according to the third aspect of the present invention, the saddle-ride type vehicle is a motorcycle; the second surface (46) is located below the first surface (45); the stepped portion (47) extends in a front-rear direction; on an inner edge of the first surface (45) in the vehicle width direction, a lateral surface portion (48) is provided which bends and extends rearward therefrom; and a portion at which the stepped portion (47), the lateral surface portion (48), and the first surface (45) intersect each other forms a bow-shaped corner portion (49) which is oriented to a travelling direction during cornering.

According to a fifth aspect of the present invention, in the saddle-ride type vehicle according to the third aspect of the present invention, each of the inhibitor portions (44) is provided to a spoiler member (38) extending between upper portions of the left and right inner cowls (37); a front cowl (31) is provided between upper portions of the left and right side cowls (32); and the spoiler member (38) has a downwardly stepped portion (50) located below the front cowl (31) and extending downward from a position rearward of a front edge of the front cowl (31) and then extending rearward.

### Effects of the Invention

According to the first aspect of the present invention, the inhibitor surfaces can cause travelling wind to flow to the outside of the side cowls as much as possible, while suppressing the influence on the design of the side cowls. This reduces travelling wind flowing through the radiator above the center of gravity. Accordingly, the decrease in the load distributed to the front wheel can be suppressed.

According to the second aspect of the present invention, the inhibitor surfaces face frontward obliquely outwardly in the vehicle width direction. Accordingly, the flow of travelling wind can be directed to the outside of the side cowls efficiently.

According to the third aspect of the present invention, the stepped portion is provided to each inhibitor surface. Thus, the deflection of travelling wind can be facilitated. This makes it easier to lean the vehicle. Accordingly, the handling performance can be improved.

According to the fourth aspect of the present invention, the bow-shaped corner portions which are oriented to the travelling direction during cornering are provided. Thus, during cornering, the saddle-ride type vehicle advances with the bow-shaped corner portions cutting through travelling wind which sticks to the inner cowls. This makes it easier to lean the vehicle body, that is, reduces the resistance acting on the handling. Accordingly, the steerability can be enhanced. To be specific, during cornering to the right, for example, motorcycle travels by leaning the vehicle body rightward while moving forward in an obliquely right direction. During this action, the left inner cowl receives travelling wind from the obliquely right direction (travelling direction), and also receives a resistance of air which is pushed away by the leaning of the vehicle body. In this respect, the bow-shaped corner portions can reduce the resistance acting on the handling.

According to the fifth aspect of the present invention, the downwardly stepped portion drooping below the front cowl can facilitate the deflection of travelling wind. This makes it easier to lean the vehicle. Accordingly, the handling performance can be improved.

### Brief Description of the Drawings

- Fig. 1: is a left-side view of a motorcycle having a structure according to an embodiment of the present invention.
- Fig. 2: is a front view of the motorcycle.
- Fig. 3: is an enlarged view of a main part in Fig. 2.
- Fig. 4: is a perspective view of a front part of the motorcycle as seen from the front in an obliquely upward direction.
- Fig. 5: is an enlarged view of a main part in Fig. 4.
- Fig. 6: is a cross-sectional view taken along the A-A line in Fig. 3.
- Fig. 7: is a cross-sectional view taken along the B-B line in Fig. 2.
- Fig. 8: is a perspective view showing a rear portion of an under cowl of the motorcycle.
- Fig. 9: is a cross-sectional view taken along the C-C line in Fig. 1.
- Fig. 10: is a perspective view of a rear part of the motorcycle with a rear seat of the motorcycle being detached.
- Fig. 11: is an enlarged view of a main part in Fig. 10.
- Fig. 12: is a vertical cross-sectional view of a storage box disposed below the rear seat.
- Fig. 13: is a left-side view of a conventional motorcycle.
- Fig. 14: is a front view of the conventional motorcycle.

### Modes for Carrying Out the Invention

Hereinbelow, an embodiment of the present invention will be described based on the drawings. Note that in the drawings used below, arrows FR, UP, and LH indicate front, upper, and left sides of the vehicle, respectively.

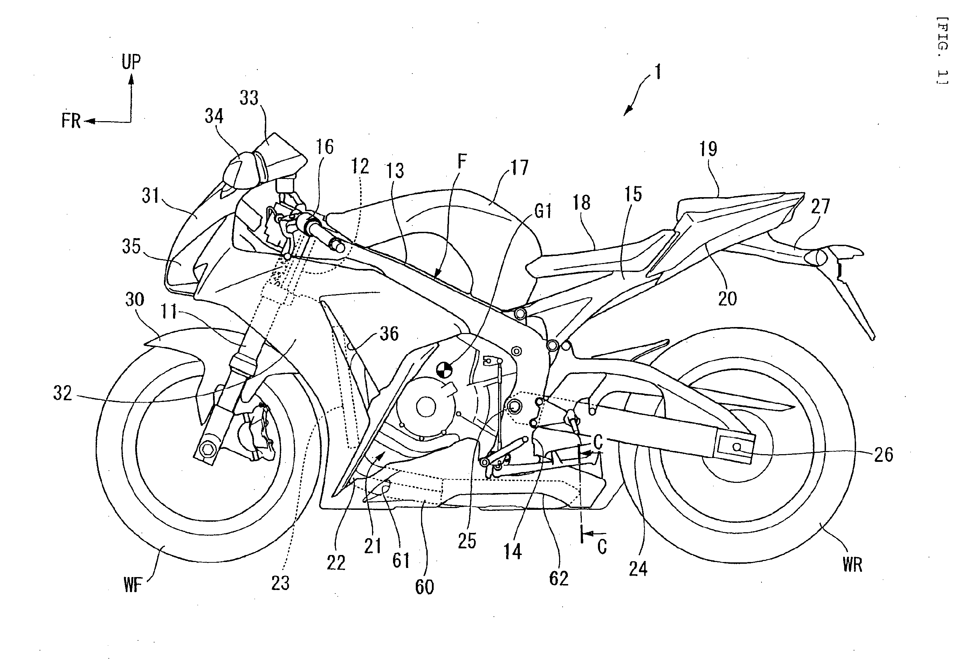

Fig. 1 shows a motorcycle 1 having a structure according to the embodiment of the present invention. A vehicle body frame F of this motorcycle 1 includes: a head pipe 12 steerably supporting front forks 11 rotationally supporting a front wheel WF; paired left and right main frames 13 and 13 extending downwardly rearward from the head pipe 12; paired left and right pivot plates 14 and 14 extending downward from rear portions of the main frames 13 and 13, respectively; and paired left and right seat rails 15 and 15 extending upwardly rearward and joined to the rear portions of the main frames 13 and 13, respectively.

A handlebar 16 is fixed to upper portions of the front forks 11, and a fuel tank 17 is disposed above the main frames 13 and 13. A front seat 18 on which a driver sits is disposed behind the fuel tank 17 above the seat rails 15 and 15. A rear seat 19 on which a passenger sits is disposed behind the front seat 18. The rear seat 19 is attached in a detachably attachable manner to an upper portion of a rear cowl 20 which is supported on upper portions of the seat rails 15 and 15.

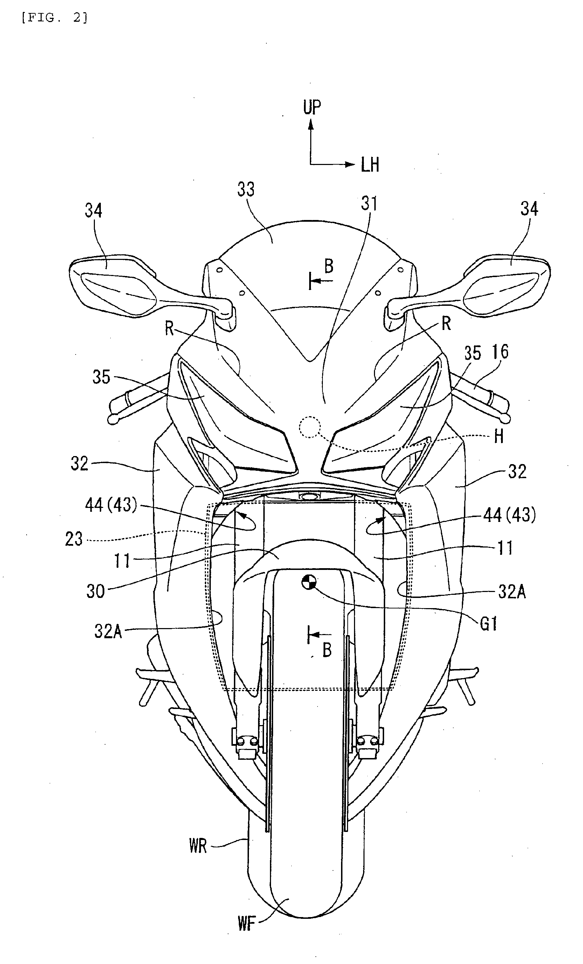

A parallel multi-cylinder engine 21 is hung on the main frames 13 and 13. Reference numeral 22 in Fig. 1 represents a set of exhaust pipes connected to the engine 21. The exhaust pipes 22 curve downward from a front portion of the engine 21 and then extend rearward. Referring also to Fig. 2, in front of the engine 21 is disposed a radiator 23 of a substantially rectangular shape with its longitudinal direction oriented in the vehicle width direction. The radiator 23 faces the front so that travelling wind can be introduced therein from the front.

The radiator 23 is supported by unillustrated brackets fixed to the main frames 13 and 13. Here, reference numeral G1 represents the center of gravity of the motorcycle 1. In a side view, the center of gravity G1 is set at a position within the outline of the engine 21 substantially at the center in the vehicle top-bottom and front-rear directions.

A front end portion of a swingarm 24 is supported swingably on middle portions, in the top-bottom direction, of the pivot plates 14 and 14 through a pivot shaft 25. An axle 26 of a rear wheel WR is supported rotatably on a rear end portion of the swingarm 24. A rear fender 27 is disposed above the rear wheel WR with a certain space therebetween. The rear fender 27 extends rearward from below the seat rails 15 and 15.

The upper side of the front wheel WF is covered with a front fender 30. The front fender 30 is supported on the front forks 11 and 11. The front side of the head pipe 12 is covered with a front cowl 31. Both lateral sides of a front part of the vehicle body are covered with paired left and right side cowls 32 and 32 which extend rearward continuously from lateral portions of the front cowl 31, respectively. As shown in Fig. 2, a V-shaped cut is formed in an upper portion of the front cowl 31, and a screen 33 is disposed on this cut. The screen 33 extends obliquely upward and rearward.

Moreover, the lower side and lower lateral sides of the engine 21 are covered with an under cowl 60. The under cowl 60 extends in the vehicle front-rear direction. The front end of the under cowl 60 is continuous with the lower ends of the side cowls 32 and 32. Paired left and right wind exhaust openings 61 and 61 are formed in a front portion of the under cowl 60, through which travelling wind having flowed along lower portions of the side cowls 32 and 32 is exhausted outward in the vehicle width direction. The under cowl 60 covers also the lower side of each exhaust pipe 22. A heat exhaust opening 62 through which to expose part of the exhaust pipe 22 is formed in the under cowl 60 between a middle portion and a rear portion thereof in the front-rear direction.

Referring to Fig. 2, left and right side mirrors 34 and 34 are attached to opposite sides of the front cowl 31 having the screen 33 in between, respectively. Paired left and right headlight lenses 35 and 35 are provided buried below the side mirrors 34 and 34, respectively. The headlight lenses 35 and 35 are provided in such a fashion as to form lateral portions of the front cowl 31. As shown in Fig. 1, the headlight lenses 35 and 35 extend obliquely upward and rearward.

Reference numerals R and R in Fig. 2 represent ridge lines present on the front cowl 31 between the upper edges of the headlight lenses 35 and 35 and the edges of the V-shaped cut in the upper portion of the front cowl 31, respectively, and front lateral portions of the front cowl 31 are in an angular shape jutting upwardly frontward. In the front cowl 31, the ridge lines R and R extend obliquely rearward. Such a shape of the front cowl 31 improves the effect of deflection of travelling wind and thereby makes it possible to produce turbulence. Accordingly, the steerability can be enhanced. Meanwhile, reference numeral H in Fig. 2 represents a horn, and the horn H is housed behind the front cowl 31.

The side cowls 32 and 32 cover the lateral sides of the vehicle continuously from the lateral portions (the rear edges of the headlight lenses 35 and 35) of the front cowl 31. The upper edges of the side cowls 32 and 32 extend rearward from below the handlebar 16 along the main frames 13 and 13, while the lower edges of the side cowls 32 and 32 extend downwardly rearward along the outline of the front wheel WF. Thus, each of the side cowls 32 and 32 is formed in a substantially triangular shape in a side view.

As shown in Figs. 2, 3, and 4, front portions of the side cowls 32 and 32 extend inward in the vehicle width direction such that the front portions of the side cowls 32 and 32 cover both lateral portions of the radiator 23 from the front and lateral sides. Front edges 32A and 32A of the side cowls 32 and 32 extend in such a way as to curve inward in the vehicle width direction from an upper side to a lower side thereof in a front view. The side cowls 32 and 32 cover the both lateral portions of the radiator 23 entirely in the top-bottom direction.

Referring to Fig. 1, wind exhaust ports 36 and 36 are formed respectively in the side cowls 32 and 32 in the form of a cutout. The wind exhaust ports 36 and 36 extend obliquely upward and frontward from the rear ends of the side cowls 32 and 32, respectively. Through the wind exhaust ports 36 and 36, a part of travelling wind flowing through the radiator 23 between the side cowls 32 and 32 is exhausted outward in the vehicle width direction.

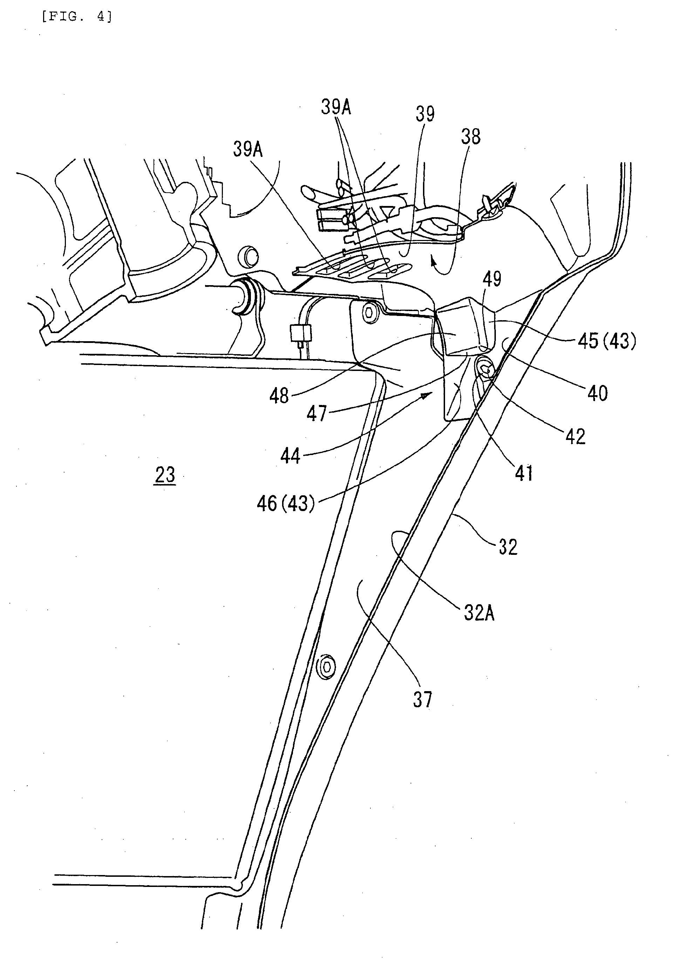

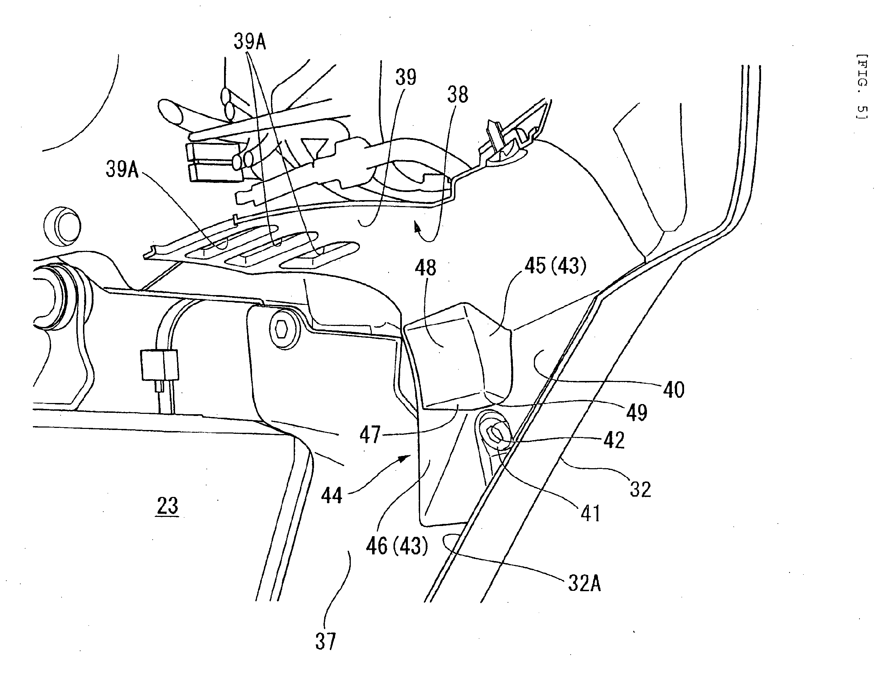

Referring to Figs. 4, 5, and 6, paired left and right inner cowls 37 and 37 are disposed on the inner side of the side cowls 32 and 32, respectively. The inner cowls 37 and 37 straddle spaces between the lateral portions of the radiator 23 and the front edges 32A and 32A of the side cowls 32 and 32, respectively, to form paths to guide travelling wind to the radiator 23. The inner cowls 37 and 37 extend in the top-bottom direction in a front view behind the front edge portions 32A and 32A of the side cowls 32 and 32 and are attached and fastened to the side cowls 32 and 32 at appropriate spots with bolts.

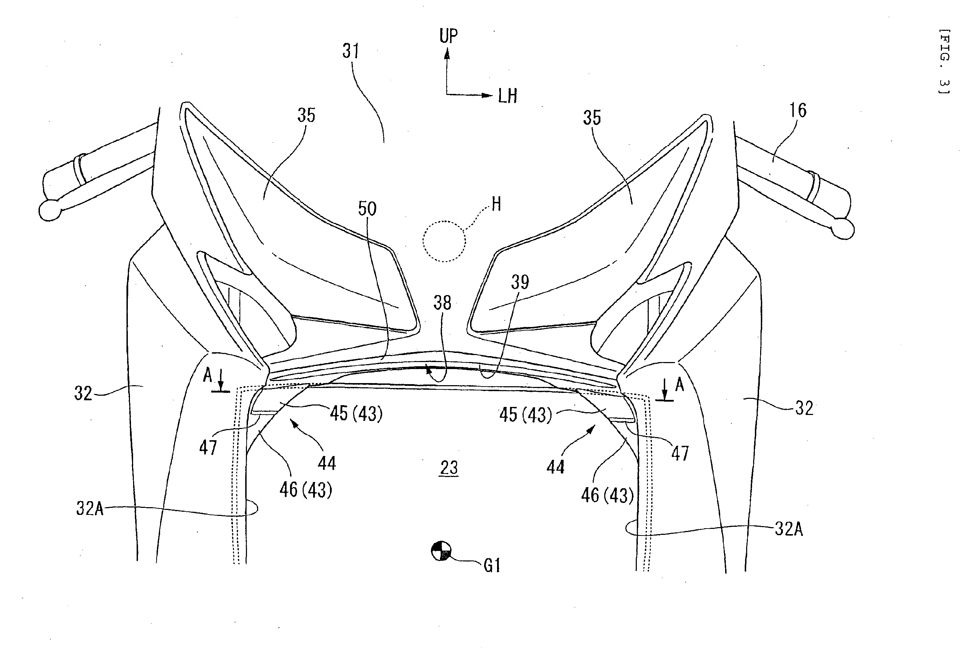

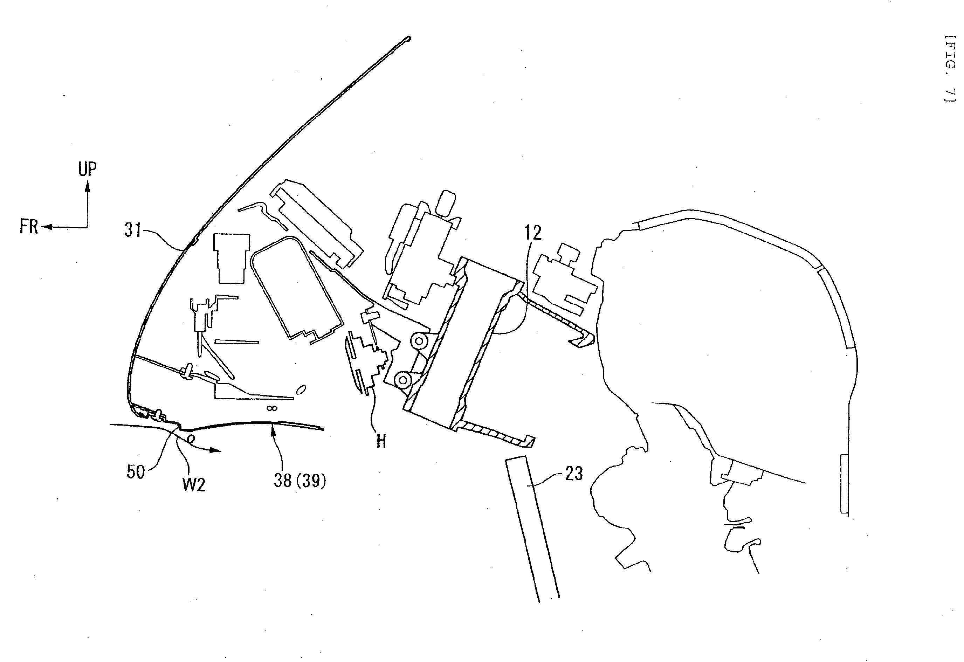

Referring also to Fig. 3, a spoiler member 38 is provided between upper portions of the inner cowls 37 and 37 below the front cowl 31. Referring also to Fig. 7, this spoiler member 38 is formed by integrally including a spoiler main portion 39 and left and right attachment plate portions 40 and 40. The spoiler main portion 39 extends in the vehicle width direction so as to prevent the introduction of travelling wind to the front cowl 31 side and thus to reduce lift force. As shown in Fig. 4, the attachment plate portions 40 and 40 bend downward from both lateral sides of the spoiler main portion 39, overlap the inner surfaces of the inner cowls 37 and 37, and are fixed to the inner cowls 37 and 37, respectively.

In each of the attachment plates 40 and 40, a recess 42 is formed which sinks outward in the vehicle width direction to house the head of a screw 41. The spoiler member 38 is fixed to the inner cowl 37 by screwing the screw 41 into the inner cowl 37. Moreover, multiple through-holes 39A ... arranged in the vehicle width direction are formed in the spoiler main portion 39. These through-holes 39A ... are formed so that the sound generated by the horn H located above the spoiler member 38 can be outputted easily to the outside.

On the spoiler member 38 are formed paired left and right inhibitor portions 44 and 44 having inhibitor surfaces 43 and 43 extending inward in the vehicle width direction from the left and right attachment plate portions 40 and 40, respectively. The inhibitor portions 44 and 44 are formed integrally with the spoiler member 38.

Referring to Figs. 2, 3, and 6, the inhibitor surfaces 43 and 43 are surfaces extending inward in the vehicle width direction from the inner surfaces, in the vehicle width direction, of the inner cowls 37 and 37 in such a way as to hit the inner surfaces, in the vehicle width direction, of the inner cowls 37 and 37 at positions upward of the center of gravity G1 of the vehicle and rearward of the front edges 32A and 32A of the side cowls 32 and 32, respectively. The inhibitor surfaces 43 and 43 are surfaces formed discontinuously from the design surfaces of the side cowls 32 and 32. Note that the design surfaces of the side cowls 32 and 32 refer to the lateral and front portions of the side cowls 32 and 32 that are exposed as the exterior.

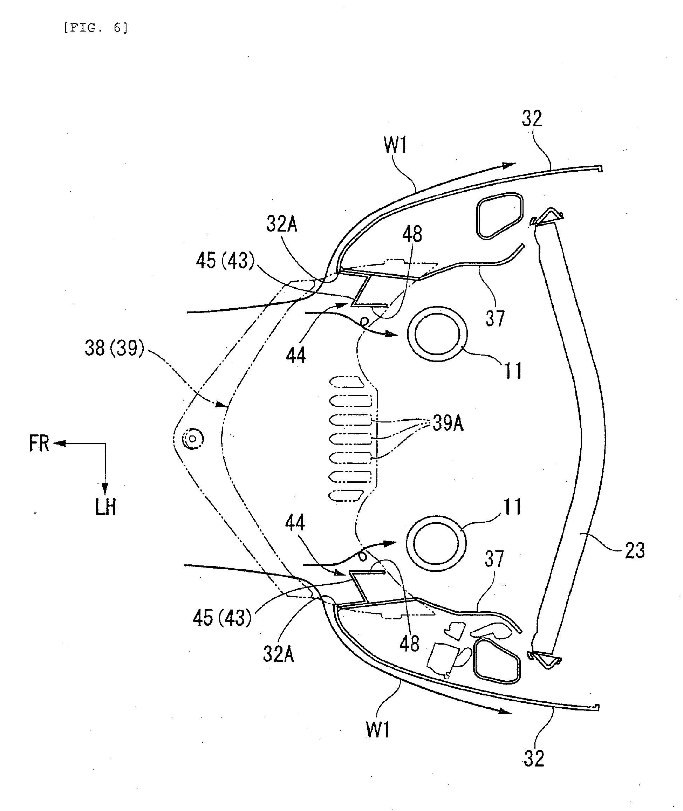

Extending inward in the vehicle width direction from the inner surfaces, in the vehicle width direction, of the inner cowls 37 and 37, the inhibitor surfaces 43 and 43 cause travelling wind to flow to the outside of the side cowls 32 and 32. In this embodiment, the inhibitor surfaces 43 and 43 respectively include: first surfaces 45 and 45 facing frontward obliquely outwardly in the vehicle width direction as shown in Fig. 6; second surfaces 46 and 46 located behind and below the first surfaces 45 and 45 and facing frontward as shown in Figs. 3 to 5; and stepped portions 47 and 47 formed between the first surfaces 45 and 45 and the second surfaces 46 and 46. The stepped portions 47 and 47 extend in the front-rear direction. Moreover, on the inner edges of the first surfaces 45 and 45 in the vehicle width direction, there are provided lateral surface portions 48 and 48 which bend and extend rearward therefrom.

Here, the portions at which the stepped portions 47 and 47, the lateral surface portions 48 and 48, and the first surfaces 45 and 45 intersect each other (corner portions) form bow-shaped corner portions 49 and 49, respectively, each of which is oriented frontward and downward obliquely inwardly in the vehicle width direction when the vehicle is in an upright position. These bow-shaped corner portions 49 and 49 are oriented to the travelling direction during cornering.

On the other hand, referring to Fig. 7, the spoiler main portion 39 of the spoiler member 38 has a downwardly stepped portion 50 which extends downward from a position rearward of the front edge of the front cowl 31, and then extends rearward. As shown in Fig. 3, both lateral end portions of the downwardly stepped portion 50 extend to the vicinities of the inner surfaces of the side cowls 32 and 32, respectively. The surface of the downwardly stepped portion 50 faces frontward.

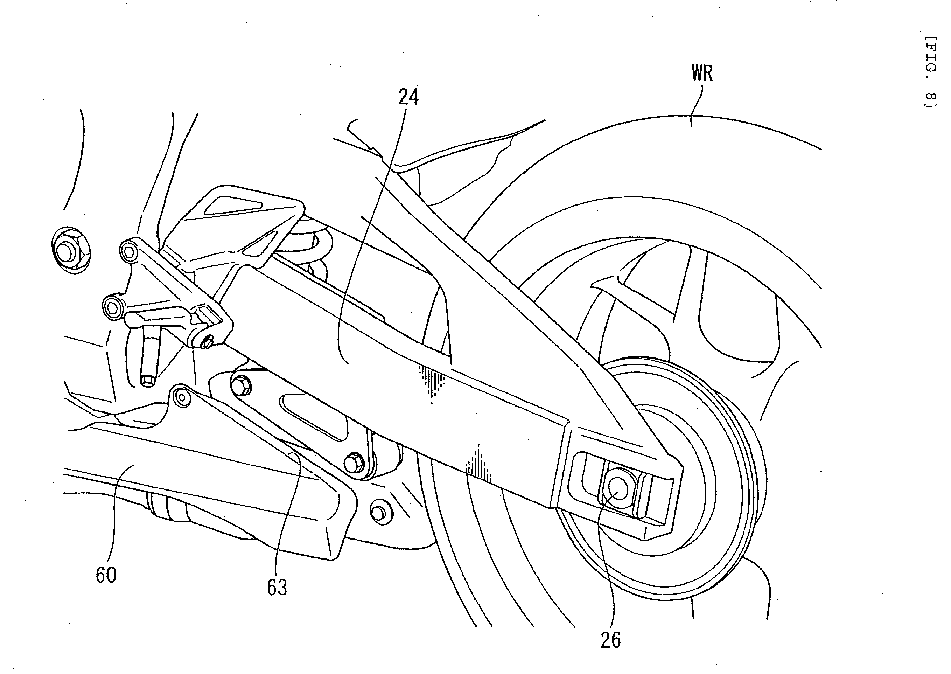

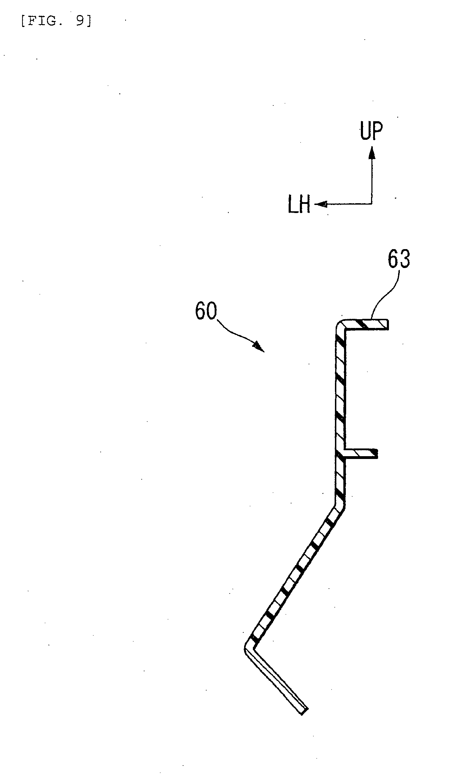

Meanwhile, in the motorcycle 1, as shown in Fig. 8, the rear upper edge of the under cowl 60 is inclined to obliquely downward and rearward from the front. Moreover, as shown in Fig. 9, at the rear upper edge of the under cowl 60, there is formed a rib 63 which bends and extends inward in the vehicle width direction. Note that while Figs. 8 and 9 show only the rib 63 formed at the rear upper edge of the under cowl 60 on the left side, the same rib is formed at the rear upper edge of the under cowl 60 on the right side.

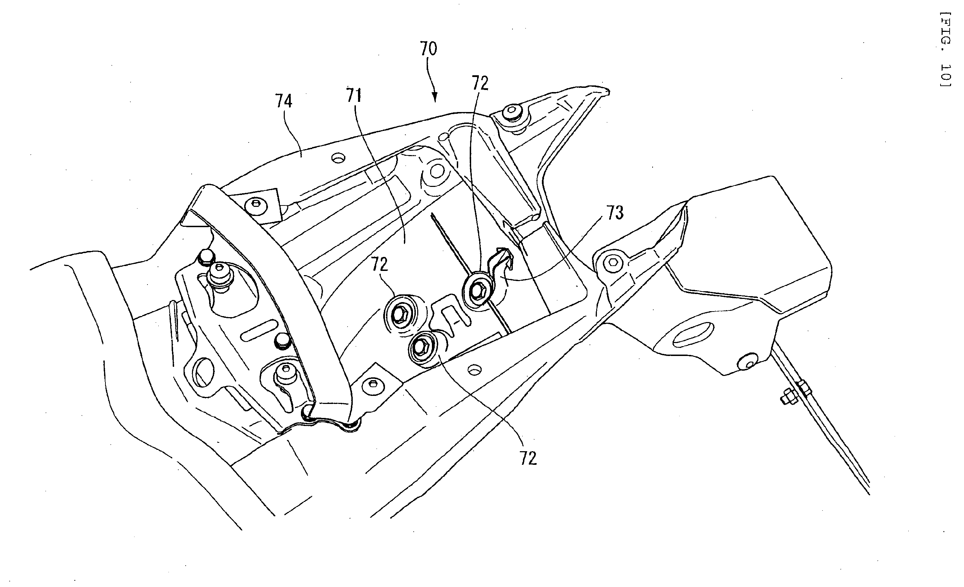

Referring next to Figs. 10, 11, and 12, the drawings show a storage box 70 which is designed to be opened through the rear seat 19 and made of a resin material. The storage box 70 is supported on the seat rails 15 and 15 and covered with the rear cowl 20 which is unillustrated in the drawings. The storage box 70 is formed by a bottom portion 71 and peripheral wall portions 74 rising from both lateral portions of the bottom portion 71. The bottom portion 71 and the peripheral wall portions 74 are separate members.

The bottom portion 71 of the storage box 70 is inclined obliquely upward and rearward along the seat rails 15 and 15. An unillustrated cross member is laid between the seat rails 15 and 15. In the bottom portion 71 of the storage box 70, there are formed multiple boss portions 72 ... to insert bolts for fastening the bottom portion 71 to the cross member.

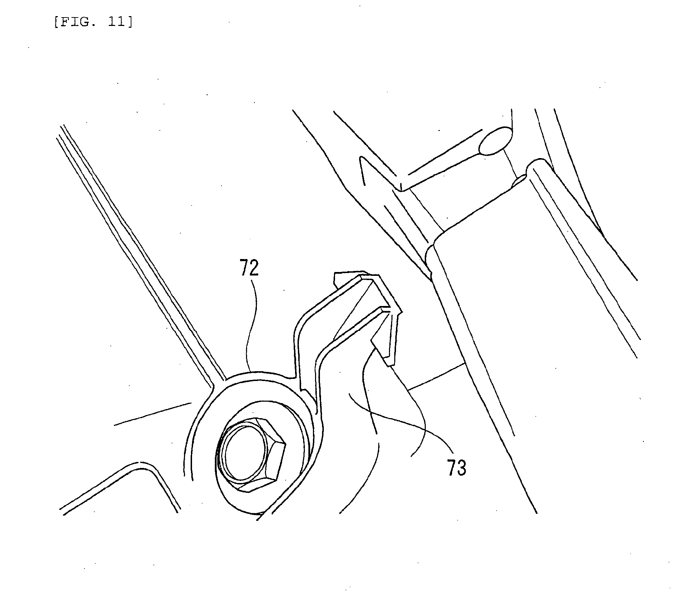

A hook 73 protruding upward is formed integrally with a rear portion of the storage box 70. As shown in Fig. 11, the hook 73 has such a shape that the hook 73 is linked integrally to a rear portion of the rear boss portion 72 and protrudes at an inclination from a direction perpendicular to the surface of the bottom portion 71 with its tip side being bent. The hook 73 is used to hook a rope-shaped member of rubber or the like. Since the inner side of the bent portion of the hook 73 is in an arc shape, a rope-shaped member can be easily hooked thereon.

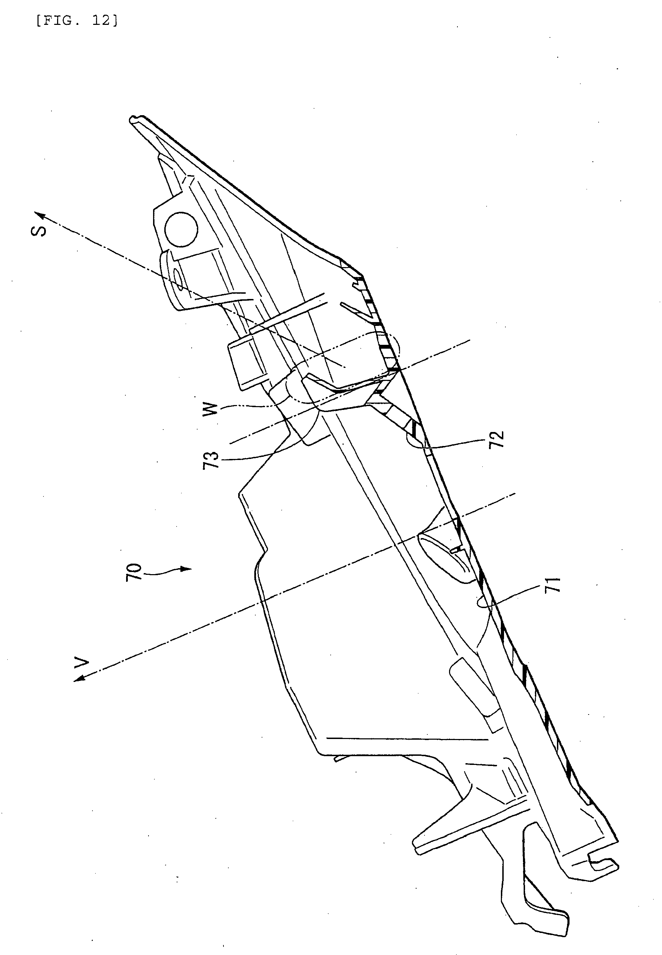

The bottom portion 71 of the storage box 70 is formed by molding. In Fig. 12, reference numeral V indicates a straight line representing the moving direction of a movable die for molding the bottom portion 71. As is obvious from this straight line V, the hook 73 has a portion overhanging with respect to the straight line V (the region indicated by reference numeral W shown in the drawing). For this reason, the hook 73 is molded with a die formed of a movable die, a fixed die, and additionally a slide die. In the drawing, reference numeral S represents the moving direction of this slide die.

As described above, the motorcycle 1 includes the inhibitor portions 44 and 44 having the inhibitor surfaces 43 and 43 which extend inward in the vehicle width direction from the inner surfaces, in the vehicle width direction, of the inner cowls 37 and 37 in such a way as to be discontinuous from the design surfaces of the side cowls 32 and 32 and to hit the inner surfaces, in the vehicle width direction, of the inner cowls 37 and 37 at positions upward of the center of gravity G1 of the vehicle and rearward of the front edges 32A and 32A of the side cowls 32 and 32.

By such a structure, the inhibitor surfaces 43 and 43 can cause travelling wind to flow to the outside of the side cowls 32 and 32 as much as possible as illustrated by travelling wind W1 in Fig. 6, while suppressing the influence on the design of the side cowls 32 and 32. This reduces travelling wind flowing through the radiator 23 above the center of gravity G1. Accordingly, the decrease in the load distributed to the front wheel can be suppressed.

Moreover, in the motorcycle 1, the inhibitor surfaces 43 and 43 have the first surfaces 45 and 45 facing frontward obliquely outwardly in the vehicle width direction. By such a configuration, the flow of travelling wind can be directed to the outside of the side cowls 32 and 32 efficiently.

Further, the inhibitor surfaces 43 and 43 further have the second surfaces 46 and 46 located behind the first surfaces 45 and 45 and facing frontward, and the stepped portions 47 and 47 formed between the first surfaces 45 and 45 and the second surfaces 46 and 46. In such a configuration, providing the stepped portions 47 and 47 facilitates the deflection of travelling wind. This makes it easier to lean the vehicle. Accordingly, the handling performance can be improved.

In addition, the second surfaces 46 and 46 are located below the first surfaces 45 and 45, and the stepped portions 47 and 47 extend in the front-rear direction. Moreover, on the inner edges of the first surfaces 45 and 45 in the vehicle width direction, there are provided the lateral surface portions 48 and 48 which bend and extend rearward therefrom. The portions at which the stepped portions 47 and 47, the lateral surface portions 48 and 48, and the first surfaces 45 and 45 intersect each other form the bow-shaped corner portions 49 and 49 which are oriented to the travelling direction during cornering.

In such a configuration, by providing the bow-shaped corner portions 49 and 49 which are oriented to the travelling direction during cornering, the motorcycle 1 advances with the bow-shaped corner portions 49 and 49 cutting through travelling wind which sticks to the inner cowls 37 and 37. This makes it easier to lean the vehicle body, that is, reduces the resistance acting on the handling. Accordingly, the steerability can be enhanced. To be specific, during cornering to the right, for example, motorcycle travels by leaning the vehicle body rightward while moving forward in an obliquely right direction. During this action, the left inner cowl receives travelling wind from the obliquely right direction (travelling direction), and also receives a resistance of air which is pushed away by the leaning of the vehicle body. In this respect, the bow-shaped corner portions 49 and 49 can reduce the resistance acting on the handling.

Further, in the motorcycle 1, the inhibitor portions 44 and 44 are provided to the spoiler member 38 extending between upper portions of the left and right inner cowls 37 and 37, and the front cowl 31 is provided between upper portions of the left and right side cowls 32 and 32. Moreover, the spoiler member 38 has the downwardly stepped portion 50 located below the front cowl 31 and extending downward from a position rearward of the front edge of the front cowl 31 and then extending rearward. In such a configuration, the downwardly stepped portion 50 drooping below the front cowl 31 can facilitate the deflection of travelling wind as illustrated by the travelling wind W2 in Fig. 7. This makes it easier to lean the vehicle. Accordingly, the handling performance can be improved.

While an embodiment of the present invention has been described above, the present invention is not limited to this embodiment. For example, while the inhibitor portions 44 and 44 and the spoiler member 38 are integral with each other in the description of the above embodiment, the inhibitor portions 44 and 44 and the inner cowls 37 and 37 may be molded integrally with each other, or may be attached as separated bodies.

The present invention is directed to provide a cowl structure of a saddle-ride type vehicle which can reduce travelling wind flowing through a radiator above the center of gravity of the vehicle, without deteriorating the design freedom.

A motorcycle includes: paired left and right side cowls 32 covering both lateral sides of a front part of the vehicle, respectively; a radiator 23 having left and right lateral portions thereof covered with the side cowls 32, respectively, and disposed facing frontward; and paired left and right inner cowls disposed between the radiator 23 and the side cowls 32 in such a way as to straddle spaces between the lateral portions of the radiator 23 and front edges of the side cowls 32, respectively. In addition, the motorcycle includes inhibitor portions 44 having inhibitor surfaces 43 extending inward in a vehicle width direction from inner surfaces, in the vehicle width direction, of the inner cowls in such a way as to be discontinuous from design surfaces of the side cowls 32 and to hit the inner surfaces, in the vehicle width direction, of the inner cowls at positions upward of a center of gravity G1 of the vehicle and rearward of the front edges of the side cowls 32, respectively.

## Claims

1. A saddle-ride type vehicle having a cowl structure, including:
paired left and right side cowls (32) covering both lateral sides of a front part of the vehicle, respectively;
a radiator (23) having left and right lateral portions thereof covered with the side cowls (32), respectively, and disposed facing frontward; and
paired left and right inner cowls (37) disposed between the radiator (23) and the side cowls (32) in such a way as to straddle spaces between the lateral portions of the radiator (23) and front edges of the side cowls (32), respectively,
**characterized in that** the cowl structure comprises
inhibitor portions (44) having inhibitor surfaces (43) extending inward in a vehicle width direction from inner surfaces, in the vehicle width direction, of the inner cowls in such a way as to be discontinuous from design surfaces of the side cowls (32) and to hit the inner surfaces, in the vehicle width direction, of the inner cowls (37) at positions upward of a center of gravity (G1) of the vehicle and rearward of the front edges of the side cowls (32), respectively.

2. The saddle-ride type vehicle according to claim 1, wherein each of the inhibitor surfaces (43) has a first surface (45) facing frontward obliquely outwardly in the vehicle width direction.

3. The saddle-ride type vehicle according to claim 2, wherein each of the inhibitor surfaces (43) further has a second surface (46) located behind the first surface (45) and facing frontward, and a stepped portion (47) formed between the first surface (45) and the second surface (46).

4. The saddle-ride type vehicle according to claim 3, wherein the saddle-ride type vehicle is a motorcycle,
the second surface (46) is located below the first surface (45),
the stepped portion (47) extends in a front-rear direction,
on an inner edge of the first surface (45) in the vehicle width direction, a lateral surface portion (48) is provided which bends and extends rearward therefrom, and
a portion at which the stepped portion (47), the lateral surface portion (48), and the first surface (45) intersect each other forms a bow-shaped corner portion (49) which is oriented to a travelling direction during cornering.

5. The saddle-ride type vehicle according to claim 3, wherein each of the inhibitor portions (44) is provided to a spoiler member (38) extending between upper portions of the left and right inner cowls (37),
a front cowl (31) is provided between upper portions of the left and right side cowls (32), and
the spoiler member (38) has a downwardly stepped portion (50) located below the front cowl (31) and extending downward from a position rearward of a front edge of the front cowl (31) and then extending rearward.

## Patentansprüche

1. Fahrzeug vom Sattelfahrtyp mit einer Verkleidungsstruktur, umfassend:
paarweise vorgesehene linke und rechte Seitenverkleidungen (32), welche jeweils beide lateralen Seiten von einem vorderen Teil von dem Fahrzeug abdecken;
einen Kühler (23), welcher linke und rechte laterale Abschnitte davon hat, welche jeweils mit den Seitenverkleidungen (32) abgedeckt sind und nach vorne weisend angeordnet sind; und
paarweise vorgesehene linke und rechte innere Verkleidungen (37), welche zwischen dem Kühler (23) und den Seitenverkleidungen (32) derart angeordnet sind, dass sie jeweils Zwischenräume zwischen den lateralen Abschnitten von dem Kühler (23) und vorderen Rändern von den Seitenverkleidungen (32) überspannen,
**dadurch gekennzeichnet, dass**
die Verkleidungsstruktur Hemmabschnitte (44) mit Hemmflächen (43) umfasst, welche sich in einer Fahrzeugbreitenrichtung von inneren Flächen, in der Fahrzeugbreitenrichtung, von den inneren Verkleidungen in einer solchen Weise einwärts erstrecken, dass sie von Design-Flächen von den Seitenverkleidungen (32) diskontinuierlich sind und die jeweils, in der Fahrzeugbreitenrichtung, die inneren Flächen von den inneren Verkleidungen (37) an Positionen aufwärts von einem Schwerpunkt (G1) von dem Fahrzeug und rückwärts von den vorderen Rändern von den Seitenverkleidungen (32) treffen.

2. Fahrzeug vom Sattelfahrtyp nach Anspruch 1, wobei jede von den Hemmflächen (43) eine erste Fläche (45) hat, welche in der Fahrzeugbreitenrichtung schräg nach außen nach vorne weist.

3. Fahrzeug vom Sattelfahrtyp nach Anspruch 2, wobei jede von den Hemmflächen (43) ferner eine zweite Fläche (46) hat, welche hinter der ersten Fläche (45) angeordnet ist und nach vorne weist, und einen gestuften Abschnitt (47) hat, welcher zwischen der ersten Fläche (45) und der zweiten Fläche (46) ausgebildet ist.

4. Fahrzeug vom Sattelfahrtyp nach Anspruch 3, wobei das Fahrzeug vom Sattelfahrtyp ein Kraftrad ist,
die zweite Fläche (46) unter der ersten Fläche (45) angeordnet ist,
sich der gestufte Abschnitt (47) in einer Längsrichtung erstreckt,
an einem inneren Rand von der ersten Fläche (45), in der Fahrzeugbreitenrichtung, ein lateraler Flächenabschnitt (48) vorgesehen ist, welcher sich wölbt und davon nach hinten erstreckt, und
ein Abschnitt, an welchem der gestufte Abschnitt (47), der laterale Flächenabschnitt (48) und die erste Fläche (45) einander schneiden, einen bogenförmigen Eckabschnitt (49) ausbildet, welcher während einer Kurvenfahrt in eine Fahrtrichtung orientiert ist.

5. Fahrzeug vom Sattelfahrtyp nach Anspruch 3, wobei jeder von den Hemmabschnitten (44) an einem Spoiler-Element (38) vorgesehen ist, welches sich zwischen oberen Abschnitten von den linken und rechten inneren Verkleidungen (37) erstreckt,
eine vordere Verkleidung (31) zwischen oberen Abschnitten von den linken und rechten Seitenverkleidungen (32) vorgesehen ist, und
das Spoiler-Element (38) einen abwärtsgestuften Abschnitt (50) hat, welcher unter der vorderen Verkleidung (31) angeordnet ist und sich von einer Position rückwärts von einem vorderen Rand von der vorderen Verkleidung (31) nach unten erstreckt und dann nach hinten erstreckt.

## Revendications

1. Un véhicule de type à selle possédant une structure de capot comprenant : des capots latéraux (32) gauche et droit appariés couvrant les deux côtés latéraux respectifs d'une partie frontale du véhicule ;
un radiateur (23) possédant des parties latérales gauche et droite couvertes respectivement des capots latéraux (32) et disposées face tournée vers l'avant; et des capots internes (37) gauche et droit appariés disposés entre le radiateur (23) et des capots latéraux (32) de manière à chevaucher les espaces respectifs entre les parties latérales du radiateur (23) et les bords frontaux des capots latéraux (32),
**caractérisé en ce que** la structure de capot comprend des parties inhibitrices (44) possédant des surfaces inhibitrices (43) s'étendant vers l'intérieur dans le sens de la largeur du véhicule à partir des surfaces internes, dans le sens de la largeur du véhicule, des capots internes de manière à interrompre les surfaces de conception des capots latéraux (32) et à heurter les surfaces internes, dans le sens de la largeur du véhicule, des capots internes (37) dans des positions au-dessus d'un centre de gravité (G1) du véhicule et à l'arrière des bords frontaux respectifs des capots latéraux (32).

2. Le véhicule de type à selle selon la revendication 1, dans lequel chacune des surfaces inhibitrices (43) possède une première surface (45) tournée vers l'avant et, en oblique, vers l'extérieur dans le sens de la largeur du véhicule.

3. Le véhicule de type à selle selon la revendication 2, dans lequel chacune des surfaces inhibitrices (43) possède par ailleurs une deuxième surface (46) située derrière la première surface (45) et tournée vers l'avant et une partie étagée (47) formée entre la première surface (45) et la deuxième surface (46).

4. Le véhicule de type à selle selon la revendication 3, dans lequel le véhicule de type à selle est une motocyclette,
la deuxième surface (46) est située en dessous de la première surface (45),
la partie étagée (47) s'étend dans une direction avant/arrière,
sur un bord interne de la première surface (45) dans le sens de la largeur du véhicule, une partie de surface latérale (48) est fléchie et s'étend vers l'arrière à partir de là, et une partie à hauteur de laquelle la partie étagée (47), la partie de surface latérale (48) et la première surface (45) se croisent, forme une partie de coin arquée (49) qui est orientée dans une direction de déplacement pendant un virage.

5. Le véhicule de type à selle selon la revendication 3, dans lequel chacune des parties inhibitrices (44) est dotée d'un élément déflecteur (38) s'étendant entre les parties supérieures des capots internes gauche et droit (37),
un capot avant (31) est prévu entre les parties supérieures des capots (32) gauche et droit, et
l'élément déflecteur (38) présente une partie étagée vers le bas (50) située en dessous du capot avant (31) et s'étendant vers le bas à partir d'une position à l'arrière d'un bord frontal du capot avant (31) avant de s'étendre vers l'arrière.
